# FASCICULE DE BREVET EUROPEEN

(11) **EP 2 534 361 B1**
(45) Date de publication et mention de la délivrance du brevet: **30.12.2015**
(21) Numéro de dépôt: 11708551.4
(22) Date de dépôt: 11.02.2011
(51) Int. Cl.: F02K 1/82, F02C 7/045

(54) **CONDUIT DE GUIDAGE DE GAZ COMPORTANT UN REVETEMENT D'ATTENUATION DE BRUIT AYANT UNE VARIATION DE POROSITE**
GASFÜHRUNGSKANAL MIT VERÄNDERLICHER POROSITÄT AUFWEISENDER, GERÄUSCHDÄMMENDER VERKLEIDUNG
GAS GUIDING CONDUIT WITH NOISE ATTENUATION PANEL HAVING VARYING POROSITY

(30) Priorité: 12.02.2010 FR 1000590
(43) Date de publication de la demande: 19.12.2012
(73) Titulaire: Turbomeca, 64510 Bordes (FR)
(72) Inventeur: BOUTY, Eric, Jean-Louis, F-64000 Pau (FR); REGAUD, Pierre-Luc, F-64000 Pau (FR); VALLON, Antoine, Yvan, Alexandre, F-64000 Pau (FR)
(74) Mandataire: Bringer, Mathieu
(86) Numéro de dépôt international: PCT/FR2011/050296
(87) Numéro de publication internationale: WO 2011/098737

(56) Documents cités:
- EP-A1- 0 036 356
- EP-A2- 1 391 597
- EP-A2- 1 744 033
- FR-A1- 2 905 984
- FR-A1- 2 915 522
- GB-A- 460 148
- JP-A- 10 016 821
- US-A1- 2006 169 532
- US-B1- 6 752 240

## Description

L'invention concerne le domaine de la réduction du bruit dans un conduit d'écoulement de gaz et plus particulièrement dans un moteur à turbine à gaz.

Un panneau acoustique est divulgué dans le document FR-A-2915522.

Un moteur à turbine à gaz pour un aéronef tel qu'un avion ou un hélicoptère comprend généralement, d'amont en aval dans le sens de l'écoulement des gaz, un ou plusieurs étages de compresseurs, une chambre de combustion, un ou plusieurs étages de turbines, et un dispositif d'éjection des gaz tel qu'une tuyère.

Un problème constant des fabricants de moteurs est la réduction du bruit, par souci notamment du confort des passagers et des habitants des zones survolées par les aéronefs. En particulier, les hélicoptères se déplacent à proximité des zones habitées et le bruit de leur tuyère d'échappement forme une composante importante du bruit total qu'ils génèrent. L'atténuation du bruit sortant par la tuyère peut être obtenue par l'utilisation d'un revêtement d'atténuation acoustique formant la paroi interne de la tuyère et donc l'enveloppe externe de la veine de gaz. Un tel revêtement peut par exemple comporter une tôle perforée débouchant sur une ou plusieurs cavités de résonnance, chaque ensemble d'une cavité et d'un ou plusieurs orifices formant un résonateur de Helmholtz. Les cavités peuvent par exemple être de structure du type à nids d'abeilles ou du type tubulaire.

De tels revêtements d'atténuation ou traitement acoustique permettent généralement l'atténuation des fréquences sonores dites moyennes, par exemple comprises entre 0,8 et 5kHz. Les fréquences sonores traitées dépendent notamment de la profondeur des cavités de résonance qui sont donc dimensionnées à cet effet.

L'objectif de la présente invention est de proposer un conduit de guidage de gaz comportant un revêtement d'atténuation du bruit qui permette une atténuation efficace du bruit, de manière simple, peu onéreuse et n'impliquant pas de dispositifs lourds et/ou volumineux.

L'invention s'applique particulièrement bien à l'atténuation du bruit sortant de la tuyère d'un moteur à turbine à gaz d'hélicoptère. Toutefois, la Demanderesse a résolu un problème plus général d'atténuation du bruit dans un conduit parcouru par un flux de gaz et entend étendre la portée de ses droits à cette application.

C'est ainsi que l'invention concerne un conduit de guidage de gaz le long d'une veine de gaz comme definie dans la revendication 1.

Par densité des orifices, on comprend le nombre d'orifices par unité de surface de la paroi ; autrement dit, la densité d'orifices sur la paroi correspond à la porosité de cette dernière : plus la densité d'orifices est importante, plus la paroi est poreuse. Par évolution continue de cette densité, on comprend une évolution continue au sens mathématique, c'est-à-dire une évolution progressive dont les différentes valeurs (discrètes) suivent une courbe mathématique continue.

Grâce à l'invention, l'atténuation acoustique est améliorée de manière spectaculaire et peut en particulier être optimisée le long de la veine de gaz. En effet, la densité d'orifices est un paramètre important pour la définition de l'impédance (et plus précisément de la résistance) acoustique de la paroi; la densité des orifices évoluant le long de la veine de gaz de manière continue, la résistance acoustique de la paroi peut être adaptée le long de la veine à la variation continue d'autres paramètres, ce qui permet d'optimiser cette résistance et donc l'atténuation acoustique en fonction de la position le long de la paroi du conduit. Cela permet notamment de prendre en compte, le long de la paroi du conduit, l'évolution du niveau sonore, de la vitesse des gaz ou encore de leur température, qui influent aussi sur la valeur de la résistance de la paroi. Finalement, on peut, grâce à la variation de porosité, compenser la variation de la vitesse des gaz ou du niveau sonore le long de la veine pour conférer à la paroi une résistance sensiblement constante le long de cette veine. L'invention ne vise à pas à multiplier les bandes de fréquences qui peuvent être atténuées par un même revêtement mais à optimiser l'atténuation d'une bande de fréquence spécifique, par exemple une bande de fréquences moyennes entre 0,8 à 5 kHz.

En outre, le traitement acoustique d'une telle tuyère est ainsi optimisé; en effet, la diminution de la densité des orifices entraîne une augmentation de la résistance acoustique de la paroi entre l'amont et l'aval. Par ailleurs, la vitesse des gaz mais aussi le niveau sonore diminuent dans une tuyère de l'amont vers l'aval ce qui entraîne une diminution de la résistance acoustique entre l'amont et l'aval. Finalement, la diminution de la densité des orifices compense la diminution de la vitesse des gaz et du niveau sonore pour conférer à la paroi une résistance stabilisée le long de la veine de gaz, cette résistance pouvant être, par une bonne adaptation de la densité des orifices, rendue sensiblement constante.

Selon une forme de réalisation préférée, le conduit est un conduit de guidage des gaz d'un moteur à turbine à gaz.

Selon une forme de réalisation préférée dans ce cas, le conduit est une tuyère d'éjection des gaz.

Selon une forme de réalisation préférée, le nombre des orifices par unité de surface de la paroi diminue d'au moins 5%, de préférence entre 5% et 10%, entre une extrémité amont et une extrémité aval dudit conduit.

Selon une forme de réalisation préférée, le conduit s'étendant globalement suivant un axe, c'est la distance longitudinale entre des orifices successifs qui diminue de manière continue le long de la veine de gaz, depuis l'amont vers l'aval.

Selon une forme de réalisation préférée, le conduit s'étendant globalement suivant un axe, c'est la distance transversale entre des orifices successifs qui diminue de manière continue le long de la veine de gaz, depuis l'amont vers l'aval.

L'invention concerne encore une tuyère d'éjection de gaz d'un moteur à turbine à gaz comportant un conduit de guidage de gaz selon conforme au conduit présenté ci-dessus.

L'invention concerne encore un moteur à turbine à gaz comportant une tuyère d'éjection de gaz telle que celle présentée ci-dessus.

L'invention sera mieux comprise à l'aide de la description suivante de la forme de réalisation préférée de l'invention, en référence aux planches de dessins annexées, sur lesquelles:
- la figure 1 représente une vue schématique en coupe d'un moteur à turbine à gaz pour hélicoptère avec une tuyère avec un revêtement acoustique conforme à la forme de réalisation préférée de l'invention;
- la figure 2 représente une vue schématique en perspective éclatée de la tuyère du moteur de la figure 1 et
- la figure 3 est une représentation schématique de la distribution des orifices du revêtement acoustique de la figure 1 sur la paroi de la tuyère représentée à plat.

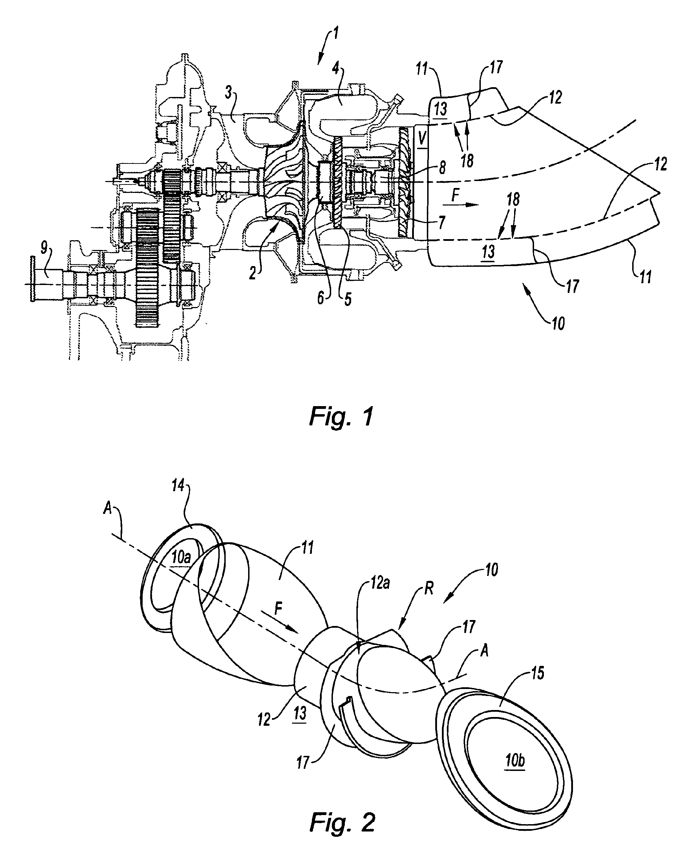

En référence à la figure 1, et de manière connue, un moteur 1 d'hélicoptère à turbine à gaz comporte un compresseur 2 (en l'espèce centrifuge et à un seul étage) alimenté en air extérieur par un canal annulaire 3 d'entrée d'air, une chambre de combustion annulaire 4 (qui est ici à flux inversé) munie d'injecteurs (non représentés) permettant son alimentation en carburant pour la combustion des gaz comprimés en provenance du compresseur 2. Les gaz brûlés entraînent une première turbine 5 (en l'espèce à un seul étage), reliée au compresseur 2 par un arbre 6 qui les rend solidaires en rotation, et une deuxième turbine 7 dite de puissance (en l'espèce à un seul étage) reliée par un arbre 8 à un engrenage permettant un transfert d'énergie mécanique depuis la turbine de puissance 7 vers un arbre de sortie 9 par exemple relié à un rotor entraînant des pales de l'hélicoptère.

En sortie de la turbine de puissance 7, le moteur 1 comporte un dispositif 10 d'éjection des gaz, en l'espèce une tuyère 10 d'éjection des gaz, dont la fonction est de guider les gaz d'échappement selon une veine V d'écoulement des gaz ou veine de gaz V, depuis l'amont vers l'aval. Le sens d'écoulement des gaz de l'amont vers l'aval est indiqué par une flèche F sur les figures.

La tuyère 10 comporte une paroi ou coque externe 11 définissant son enveloppe externe et à l'intérieur de laquelle est monté un revêtement d'atténuation acoustique R comportant une paroi ou peau ou tôle interne 12 et une cavité de résonance 13 ménagée entre la coque externe 11 et la paroi interne 12. La paroi interne 12 délimite l'enveloppe externe de la veine de gaz V. Cette paroi 12 est en l'espèce formée d'une pluralité de panneaux, pour en simplifier la fabrication ; il va de soi que, selon une autre forme de réalisation, la paroi 12 peut être formée d'une seule pièce, en particulier pour une tuyère axisymétrique.

La tuyère 10 s'étend globalement suivant un axe A. Plus précisément, elle présente en l'espèce une courbure pour diriger les gaz en sortie de tuyère dans une direction privilégiée, ce qui est utile dans son application à un hélicoptère. Cette courbure est visible sur la représentation de la figure 2. Autrement dit, l'axe A de la tuyère 10 est curviligne et suit une courbe qui représente la trajectoire moyenne du flux de gaz ou axe d'éjection des gaz. En fait, l'axe A correspond à la courbe qui suit les centres des sections successives de la veine de gaz V. Les notions de longitudinal, radial, transversal, interne ou externe sont utilisées, dans la suite de la description, en référence à cet axe global A de la tuyère 10, étant entendu qu'à chaque position longitudinale l'axe est en fait localement parallèle à la paroi interne 12 de la tuyère 10, lesdites notions ayant dès lors la même signification que pour un conduit tubulaire cylindrique mais transposée à un conduit tubulaire courbe, par analogie. On comprend d'ailleurs que la description ci-dessous (et plus généralement l'invention) s'applique bien évidemment également à un conduit présentant un axe d'écoulement rectiligne, par exemple un conduit de forme globalement cylindrique.

Outre la courbure de ses parois externe 11 et interne 12, la tuyère 10 est en l'espèce plus longue longitudinalement sur un côté (le côté inférieur sur la figure 2) que sur l'autre (le côté supérieur sur la figure 2), c'est-à-dire que son ouverture aval 10b est biseautée. Bien évidemment, l'invention s'applique également à un plan d'ouverture aval perpendiculaire à l'axe d'éjection des gaz au niveau de cette ouverture. La présence d'une ouverture aval biseautée est fréquente pour les aéronefs comportant deux moteurs tandis qu'un plan d'ouverture aval perpendiculaire à l'axe d'éjection des gaz est fréquent pour les aéronefs comportant un unique moteur.

La tuyère 10 comporte par ailleurs des parois transversales amont 14 et aval 15 dont la fonction est de fermer la cavité 13 ménagée entre la coque externe 11 et la paroi interne 12. Ces parois 14, 15 définissent une ouverture amont 10a et une ouverture aval 10b de la tuyère 10. La liaison entre la paroi interne 12 et les parois transversales 14, 15 est de préférence glissante pour permettre l'absorption des dilatations thermiques différentielles.

Par ailleurs, des parois 17 de raidissement ou raidisseurs 17 ou renforts 17 sont disposées transversalement entre la coque externe 11 et la paroi interne 12, pour rigidifier l'ensemble; la tuyère 10 comporte en l'espèce deux raidisseurs 17 qui sont de forme globalement annulaire mais ne sont pas à symétrie de révolution, dans la mesure où ils sont tronqués sur une partie de leur circonférence correspondant à une zone concave 12a de la paroi interne 12, cette zone concave 12a résultant de sa forme globale courbée. Du fait de la présence des raidisseurs 17, la cavité 13 est partitionnée en plusieurs cavités, ces cavités pouvant communiquer entre elles ou pas.

Les raidisseurs 17 peuvent remplir une deuxième fonction d'atténuation acoustique pour la mise en oeuvre d'un traitement dit à réaction localisée. Ainsi, ils permettent de partitionner la cavité 13 de traitement acoustique et donc d'adapter les fréquences acoustiques qu'elle atténue ; finalement, cela revient à donner à la cavité 13 une structure à nids d'abeilles de volumes plus ou moins grands.

La paroi interne 12 est perforée d'une pluralité d'orifices 18 de mise en communication fluidique de la veine de gaz V avec la cavité de résonance 13. Ces orifices 18 débouchent de part et d'autre de la paroi interne 12.

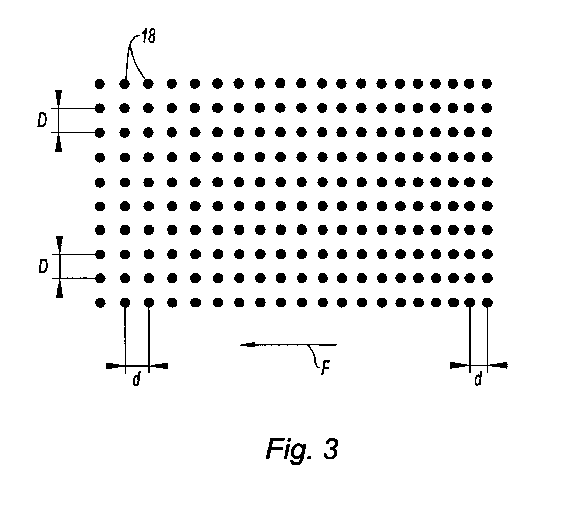

La figure 3 représente de manière schématique la distribution des orifices 18 sur la paroi interne 12 de la tuyère 10; plus précisément, la figure 3 représente les orifices 18 tels qu'ils sont répartis de manière locale, c'est-à-dire sur une portion de la paroi interne 12 de dimensions suffisamment faibles pour qu'on puisse considérer qu'elle est plane. Les orifices 18 sont de diamètres égaux et en l'espèce répartis selon une distribution à maille carrée. Leur densité évolue de manière continue le long de la veine de gaz V, c'est-à-dire en l'espèce le long de l'axe global curviligne A de la tuyère 10, depuis l'amont vers l'aval (l'amont étant, sur cette figure, situé du côté droit). Par densité d'orifices, on entend le nombre d'orifices par unité de surface de la paroi 12. En l'espèce, c'est l'espace d entre deux orifices successifs 18 dans la direction d'écoulement des gaz c'est-à-dire dans la direction de l'axe curviligne A de la tuyère 10, autrement dit, l'espace longitudinal d entre deux orifices successifs, qui évolue de manière continue le long de la paroi interne 12.

En l'espèce, la densité des orifices 18 diminue de manière continue depuis l'amont vers l'aval de la tuyère 10 le long de la veine de gaz V, c'est-à-dire que la distance d entre orifices successifs augmente depuis l'amont vers l'aval. Par ailleurs, la distance transversale ou circonférentielle entre des orifices 18 successifs d'une même rangée transversale est en l'espèce constante (il s'agit de la distance curviligne D entre deux orifices 18 dans un plan transversal à la paroi interne 10).

La valeur et l'évolution de la densité des orifices 18 le long de la paroi interne 12 sont déterminées de manière empirique. Une distribution optimale des orifices 18 dépend de l'évolution d'une pluralité de paramètres entre l'ouverture amont 10a et l'ouverture aval 10b de la tuyère 10 et notamment:
- l'évolution de la vitesse d'écoulement des gaz;
- l'évolution de la température des gaz;
- l'évolution du niveau sonore, qui varie notamment du fait de son atténuation par le revêtement d'atténuation acoustique R formé par la paroi interne 12 et la cavité de résonance 13.

L'évolution de la distribution des orifices 18 permet d'adapter l'impédance (et plus précisément la résistance) acoustique de la paroi interne 12 du revêtement acoustique R à l'évolution des paramètres ci-dessus et, si possible, de la rendre sensiblement constante le long de la paroi 12, comme déjà expliqué plus haut. L'impédance peut ainsi être adaptée pour être localement optimisée, à chaque position longitudinale, par rapport aux paramètres ci-dessus.

Par exemple, pour définir empiriquement la densité des orifices 18 le long de la paroi interne 12, on peut mettre en oeuvre le procédé suivant:
- dans une première étape, déterminer les niveaux sonores minimum (en sortie 10b) et maximum (en entrée 10a) possibles dans la tuyère 10, ainsi que les vitesses minimum (en sortie 10b) et maximum (en entrée 10a) des gaz;
- dans une deuxième étape, calculer les impédances acoustiques optimales correspondantes pour obtenir la meilleure atténuation acoustique en entrée 10a et en sortie 10b de la tuyère 10;
- dans une troisième étape, procéder à une interpolation (linéaire ou non linéaire) entre les impédances calculées aux extrémités amont 10a et aval 10b de la tuyère 10 pour déterminer une impédance préférée entre ces deux impédances optimales;
- dans une quatrième étape, en déduire la valeur de la densité des orifices 18 nécessaire pour obtenir cette impédance.

Ainsi, il est possible d'accorder le revêtement d'atténuation acoustique R à une bande de fréquences donnée (par réglage de la profondeur de la cavité 13, comme expliqué ci-dessous) et d'adapter l'impédance acoustique de la paroi interne 12 de ce revêtement R et donc l'efficacité de ce dernier pour optimiser l'atténuation acoustique résultante. Par rapport à une tuyère avec un perçage régulier, l'atténuation acoustique peut être améliorée de 50% (atténuation de 3dB contre une atténuation de 2dB avec un perçage régulier). Cette solution est d'autant plus avantageuse qu'elle n'implique pas de pièces supplémentaires, le seul perçage de la paroi interne 12 selon une densité évolutive permettant d'atteindre les résultats escomptés.

De préférence, l'évolution de la densité des orifices 18 entre l'entrée 10a de la tuyère 10 et sa sortie 10b est supérieure ou égale à 5%, de préférence comprise entre 5% et 10%. Autrement dit, en l'espèce, la distance longitudinale d entre orifices successifs 18 au niveau de la sortie 10b de la tuyère 10 est au moins 5% supérieure à la distance longitudinale d entre orifices successifs 18 au niveau de l'entrée 10a de la tuyère 10.

L'accord en fréquence du revêtement d'atténuation acoustique R (c'est-à-dire la détermination des fréquences principales qu'il atténue) se fait notamment par le réglage du volume de la cavité 13 et plus particulièrement par le réglage de sa profondeur radiale. En effet, le revêtement d'atténuation acoustique R fonctionne selon le principe d'un résonateur dit "quart d'onde", c'est-à-dire d'un résonateur dont la profondeur est égale au quart de la longueur d'onde de la fréquence centrale de la bande de fréquences qu'il atténue. Ainsi, plus on souhaite atténuer des fréquences élevées, plus la profondeur radiale de la cavité 13 doit être faible. A contrario, plus on souhaite atténuer des fréquences basses, plus la profondeur radiale de la cavité 13 doit être importante. En fonction des fréquences à atténuer, la cavité 13 peut par ailleurs être partitionnée en une pluralité de cavités (les cloisons de partition pouvant être longitudinales ou transversales), pour moduler le traitement acoustique; on peut d'ailleurs dans ce cas utiliser une structure du type à nids d'abeilles; les cloisons de partition peuvent également remplir une fonction de maintien mécanique et c'est pourquoi les raidisseurs 17 décrits plus haut peuvent remplir cette fonction de cloisons de partition pour le réglage du traitement acoustique. La longueur ou dimension axiale de la cavité 13 agit quant à elle sur le taux ou l'efficacité de l'atténuation acoustique résultante.

Par le réglage de la profondeur de la cavité 13, il est ainsi possible de choisir les gammes de fréquences à atténuer. De préférence, on atténue des fréquences comprises entre 0 et 12kHz, avantageusement entre 0,8 et 5kHz et plus particulièrement entre 2 et 2,5kHz. Par exemple, pour atténuer une bande de fréquences centrée sur environ 2kHz, on peut prévoir une cavité unique 13 (ou comme en l'espèce uniquement partitionnée par deux raidisseurs 17 de maintien mécanique) de profondeur radiale égale à 4cm avec des orifices de diamètre égal à 1,2mm, un taux de perforation variant (de l'amont vers l'aval) de 8 à 10%, la tôle dans laquelle sont percés les orifices présentant une épaisseur égale à 1mm.

Les différents éléments constitutifs de la tuyère 10 sont de préférence métalliques, par exemple formés en acier à base nickel ou en titane.

L'invention a été présentée en relation avec une distribution des orifices 18 à maille carrée mais il va de soi que d'autres distributions sont envisageables. L'évolution de la densité des orifices 18 de ces distributions peut alors se faire, de même que précédemment, par l'évolution de la distance longitudinale entre les orifices; ainsi, la distribution des orifices étant définie par des relations longitudinale et transversale entre orifices successifs, on fait évoluer la composante longitudinale de la distribution le long de la veine de gaz V. Par exemple, si la distribution est de type losange avec un grand axe longitudinal et un petit axial transversal, on peut définir une évolution de la distance de grand axe des losanges formés par des orifices successifs.

L'invention a été présentée en relation avec une évolution continue de la densité des orifices obtenue par une variation de la distance longitudinale entre orifices successifs. Conformément à une autre forme de réalisation non représentée, c'est la distance transversale (c'est-à-dire circonférentielle) entre orifices successifs transversalement qui évolue le long de la veine de gaz V. Ainsi, dans le cas d'une maille carrée par exemple, d'une rangée transversale d'orifices à l'autre, la distance séparant les orifices successifs d'une même rangée transversale augmente ou diminue de manière continue le long de la veine de gaz V.

Selon une forme de réalisation particulière, ce sont les distances longitudinales et transversales qui évoluent de manière continue le long de la veine de gaz V.

La description a été faite en relation avec un moteur à turbine à gaz comportant une tuyère simple. L'invention s'applique à d'autres types de tuyères, par exemple aux tuyères comportant un diffuseur et un éjecteur comme par exemple celle présentée dans le document FR 2,905,984 au nom de la Demanderesse, le revêtement de l'invention étant dans ce cas disposé du côté interne de l'éjecteur.

L'invention s'applique plus généralement à un conduit de guidage d'un flux de gaz, en particulier un conduit d'un moteur à turbine à gaz. En particulier, l'invention s'applique à un canal d'entrée d'air dans un moteur à turbine à gaz, par exemple à un conduit annulaire 3 tel que celui présenté sur la figure 1 ou à un conduit d'entrée d'air d'une soufflante d'un turboréacteur destiné à être utilisé sur un avion. Dans ce cas, de préférence, la densité d'orifices diminue au fur et à mesure qu'on s'éloigne du compresseur ou de la soufflante, c'est-à-dire de l'aval vers l'amont.

L'invention a été présentée en relation avec une évolution de la densité des orifices depuis l'entrée 10a du conduit 10 jusqu'à sa sortie 10b. Il va de soi que, si seule une partie de la tuyère 10 est traitée, l'évolution de la densité des orifices 18 ne se fait que sur cette partie.

## Revendications

1. Conduit (10) de guidage de gaz le long d'une veine de gaz (V), comportant un revêtement d'atténuation de bruit, le revêtement comportant une paroi (12) délimitant la veine de gaz (V) et au moins une cavité de résonance (13), la paroi (12) étant percée d'orifices (18) de mise en communication fluidique de la veine de gaz (V) avec la cavité de résonance (13) pour l'atténuation de bruit, **caractérisé par le fait que** les orifices (18) sont de diamètres sensiblement égaux et que, ledit conduit (10) étant agencée pour guider les gaz depuis l'amont vers l'aval, le nombre desdits orifices (18) par unité de surface de la paroi (12) diminuant de manière continue le long de la veine de gaz (V), depuis l'amont vers l'aval, et ladite paroi (12) ayant une résistance acoustique sensiblement constante le long de ladite veine de gaz (V), ledit nombre d'orifice par unité de surface étant défini de manière à ce que la résistance acoustique soit constante.

2. Conduit selon la revendication 1, dans lequel le nombre des orifices (18) par unité de surface de la paroi (12) diminue d'au moins 5%, de préférence entre 5% et 10%, entre une extrémité amont (10a) et une extrémité aval (10b) dudit conduit (10).

3. Tuyère d'éjection de gaz d'un moteur à turbine à gaz (1) comportant un conduit (10) de guidage de gaz selon l'une des revendications 1 à 2.

4. Moteur à turbine à gaz comportant une tuyère d'éjection de gaz selon la revendication 3.

## Patentansprüche

1. Rohr (10) zum Führen von Gas an einem Gasstrom (V) entlang, umfassend eine Lärmdämpfungsbeschichtung, wobei die Beschichtung eine Wand (12), die den Gasstrom (V) begrenzt, und mindestens einen Resonanzhohlraum (13) umfasst, wobei die Wand (12) von Öffnungen (18) zur Herstellung einer Fluidkommunikation des Gasstroms (V) mit dem Resonanzhohlraum (13) zur Lärmdämpfung durchbrochen ist, **dadurch gekennzeichnet, dass** die Öffnungen (18) im Wesentlichen den gleichen Durchmesser aufweisen, und dass das Rohr (10) eingerichtet ist, um die Gase von stromaufwärts nach stromabwärts zu führen, wobei die Anzahl der Öffnungen (18) pro Flächeneinheit der Wand (12) an dem Gasstrom (V) entlang von stromaufwärts nach stromabwärts durchgehend abnimmt und die Wand (12) einen akustischen Widerstand aufweist, der an dem Gasstrom (V) entlang im Wesentlichen konstant ist, wobei die Anzahl der Öffnungen pro Flächeneinheit derart definiert ist, dass der akustische Widerstand konstant ist.

2. Rohr nach Anspruch 1, wobei die Anzahl der Öffnungen (18) pro Flächeneinheit der Wand (12) zwischen einem stromaufwärtigen Ende (10a) und einem stromabwärtigen Ende (10b) des Rohrs (10) um mindestens 5 %, bevorzugt zwischen 5 % und 10 % abnimmt.

3. Strahlrohrdüse einer Gasturbine (1), umfassend ein Gasführungsrohr (10) nach einem der Ansprüche 1 bis 2.

4. Gasturbine, umfassend eine Strahlrohrdüse nach Anspruch 3.

## Claims

1. A duct (10) for guiding gas along a gas path (V), comprising a noise-attenuating covering, the covering comprising a wall (12) delimiting the gas path (V) and at least one resonance cavity (13), the wall (12) being pierced with holes (18) for placing the gas path (V) in fluidic communication with the resonance cavity (13) for the attenuation of noise, **characterized by** the fact that the holes (18) have substantially equal diameters and that, said duct (10) being arranged to guide the gases from upstream to downstream, the number of said holes (18) per unit of surface area of the wall (12) reduces continuously along the gas path (V), from upstream to downstream, and said wall (12) having an acoustic resistance substantially constant along said gas path (V), the number of holes per unit of surface is defined so that the acoustic resistance is constant.

2. The duct as claimed in claim 1, wherein the number of holes (18) per unit of surface area of the wall (12) reduces by at least 5%, preferably between 5% and 10%, between an upstream end (10a) and a downstream end (10b) of said duct (10).

3. A gas exhaust nozzle of a gas turbine engine (1) comprising a duct (10) for guiding gas as claimed in one of claims 1 or 2.

4. A gas turbine engine comprising a gas exhaust nozzle as claimed in claim 3.
